Europäisches Patentamt

(19) European Patent Office

Office européen des brevets

(11) Numéro de publication: **0 216 655 B1**

(12) **FASCICULE DE BREVET EUROPEEN**

(51) Int. Cl.⁴: **G21C 19/30**

(45) Date de publication du fascicule du brevet:
25.04.90

(21) Numéro de dépôt: 86401771.0

(22) Date de dépôt: 07.08.86

(54) Piège froid pour éliminer les impuretés d'un métal liquide pollué.

(30) Priorité: 12.08.85 FR 8512279

(43) Date de publication de la demande:
01.04.87 Bulletin 87/14

(45) Mention de la délivrance du brevet:
25.04.90 Bulletin 90/17

(84) Etats contractants désignés:
BE DE FR GB IT

(56) Documents cités:
EP-A- 0 082 063
FR-A- 1 549 434

(73) Titulaire: COMMISSARIAT A L'ENERGIE ATOMIQUE,
31/33, rue de la Fédération, F-75015 Paris(FR)

(72) Inventeur: Latge, Christian Résidence "La Grande
Terrasse", Bat. A Impasse Saint Eutrope, F-13100 Aix en
Provence(FR)

(74) Mandataire: Mongrédien, André et al, c/o
BREVATOME 25, rue de Ponthieu, F-75008 Paris(FR)

ACTORUM AG

## Description

L'invention concerne un piège froid pour éliminer les impuretés d'un métal liquide pollué.

Un métal liquide, par exemple le sodium ou le potassium, ou le lithium, ou un de leurs alliages, circulant comme milieu d'échange de chaleur, est sujet à la formation d'impuretés sous la forme d'oxydes, d'hydrures, d'hydroxydes de particules métalliques et de carbone.

Les pièges froids sont des appareils incorporés dans le circuit de ce métal liquide pour en éliminer les impuretés. Dans le cas d'un réacteur nucléaire, ils existent sur le circuit primaire et sur le circuit secondaire. Dans ces pièges, le métal est refroidi au-dessous de la température de saturation en impuretés solubles. A cet effet, ils comportent un dispositif externe de refroidissement pour refroidir le métal liquide de la température d'entrée à une température inférieure à la température de saturation en impuretés du métal liquide, de façon à faire cristalliser principalement les impuretés solubles. En outre, les pièges froids comportent généralement un dispositif d'échange de chaleur à récupération dans lequel le métal liquide à purifier qui entre dans le piège cède une partie de sa chaleur au métal liquide purifié qui sort de ce piège.

Enfin, ils comportent des éléments de garnissage constituant un milieu poreux pour retenir les matières solides cristallisées et filtrer les particules insolubles.

On connaît déjà (FR-A-1 549 434) un piège froid de ce type. Il comporte un corps cylindrique disposé verticalement, fermé à sa partie supérieure et à sa partie inférieure par un fond bombé. A l'intérieur de ce corps, on trouve une virole cylindrique disposée coaxialement au corps de manière à définir un espace annulaire avec la paroi interne du corps. Un élément de garnissage est disposé à l'intérieur de cette virole. Le métal liquide pollué est introduit à la partie supérieure du corps, il circule dans l'espace annulaire entre le corps et la virole.

Une chemise extérieure au corps, dans laquelle une circulation de fluide réfrigérant est assurée, permet le refroidissement de la partie inférieure du corps et par conséquent l'abaissement de la température du métal liquide en-dessous de sa température de saturation en impuretés. Ces impuretés sont retenues normalement sur l'élément de garnissage.

Le métal liquide remonte ensuite par l'intérieur de la virole, traverse un circuit d'échange thermique avec le métal liquide chaud pollué. Il est ensuite évacué hors du corps.

La présente invention a pour objet un piège froid présentant des performances améliorées par rapport aux pièges froids connus dans l'art antérieur.

Il est tout d'abord avantageux d'augmenter la capacité de rétention d'un piège froid. En effet, au cours de son fonctionnement, le piège froid se remplit progressivement d'impuretés. Lorsque le piège est rempli, il est nécessaire de le vider ou de le changer afin qu'il puisse assurer de nouveau sa fonction de façon satisfaisante. Il va de soi que si l'on augmente la capacité de rétention d'un piège froid, le nombre de pièges nécessaires pour épurer une quantité de sodium donnée sera moins important. Les pièges devront par ailleurs être vidangés moins fréquemment.

En particulier, dans le cas d'un réacteur nucléaire à neutrons rapides de type intégré, c'est-à-dire dans lequel les échangeurs et les pompes du circuit primaire sont logés à l'intérieur de la cuve et immergés dans un volume de métal liquide, les pièges du circuit primaire peuvent avantageusement être logés dans la cuve principale. Il va de soi qu'afin de réduire les dimensions et l'encombrement de la cuve, les composants qui sont logés dans cette dernière doivent être de taille aussi réduite que possible. Il apparaît donc souhaitable de concevoir un piège froid présentant à la fois des dimensions réduites, de manière à pouvoir être logé avantageusement dans la cuve d'un réacteur nucléaire de type intégré, et présentant d'autre part une grande capacité de rétention, ce qui semble contradictoire à la lumière de l'art antérieur.

La présente invention a précisément pour objet un piège froid qui permet de résoudre un tel problème.

Par ailleurs, en particulier dans le cas d'un piège froid de circuit primaire de réacteur nucléaire à neutrons rapides de type intégré, la durée d'une campagne de purification d'une masse déterminée de métal liquide constitue également un facteur très important.

On sait en effet que la masse de métal liquide est sujette à deux sortes de pollution différentes. Une première pollution est relâchée en début de cycle de fonctionnement par les surfaces des assemblages combustibles. Cette pollution se produit une seule fois pendant la durée de vie des assemblages. Il s'agit d'une pollution mixte d'hydrogène et d'oxygène. Il existe par ailleurs une pollution continue, d'hydrogène et de tritium qui est liée au fonctionnement du réacteur.

On sait que l'hydrogène et le tritium sont susceptibles de diffuser vers les circuits secondaires au travers des parois des échangeurs intermédiaires. Cette pollution continue d'hydrogène et de tritium pourra donc être éliminée par les pièges froids des circuits secondaires sous forme d'hydrures.

Par contre, la pollution d'oxygène doit être éliminée par un piège froid de circuit primaire, sous forme d'oxydes et il est avantageux d'effectuer cette purification le plus vite possible, en début de cycle, avant que des quantités trop importantes d'hydrures ne se fixent dans ce piège.

En outre, s'il se produit une réaction sodium-eau dans un circuit secondaire, il est nécessaire de purifier le métal liquide rapidement pour réduire les risques de bouchage et de corrosion en certains points dudit circuit.

La présente invention a donc également pour objet un piège froid qui permet de réduire la durée d'une campagne de purification grâce à une efficacité accrue.

En conséquence, l'invention concerne un piège froid pour éliminer des impuretés présentes dans un métal liquide pollué, comprenant un corps muni d'une tubulure d'admission pour le métal liquide pollué et une structure interne délimitant un parcours pour le métal, cette structure comportant successivement des moyens de refroidissement du métal liquide pour le refroidir jusqu'à une température de point froid inférieure à la température de saturation en impuretés et provoquer une cristallisation des impuretés, des moyens de rétention des impuretés et une tubulure d'évacuation pour évacuer hors du corps le métal débarrassé des impuretés, caractérisé en ce qu'il comporte des moyens pour recycler en amont des moyens de refroidissement une partie du fluide ayant traversé les moyens de rétention des impuretés, des moyens d'alimentation (24, 124) pour assurer la circulation du métal liquide purifié vers les moyens de recyclage, le rapport du débit recyclé au débit d'entrée étant appelé taux de recyclage $\alpha$.

De préférence, le corps comprend trois zones, à savoir une zone de récupération de chaleur dans laquelle le métal pollué entrant dans le corps et le fluide purifié relativement plus froid circulent en relation d'échange de chaleur, une zone de refroidissement du liquide, dans laquelle le métal liquide est refroidi jusqu'à une température de point froid inférieure sa température de saturation, une zone de dépôt des impuretés située à la partie inférieure du corps.

Dans la zone de dépôt des impuretés, on a placé une structure alvéolaire dans laquelle le dépôt se produit par décantation. La décantation est une caractéristique importante du fonctionnement d'un piège froid conforme à l'invention. En effet, selon l'art antérieur, par exemple le piège froid du document FR-A-1549434, la nucléation se produit exclusivement sur les surfaces de garnissage. Par suite, ce garnissage- généralement de la laine d'acier- se bouche ; il en résulte une diminution de la capacité du piège, de son efficacité, et une augmentation de la campagne de purification.

Au contraire, selon l'invention, la formation des nucléis se produit essentiellement par décantation. La laine métallique n'est donc pas bouchée par les impuretés. Le volume de cette laine peut donc être diminué, ce qui conduit à une diminution de l'encombrement du piège.

De préférence encore, le piège froid comporte un caisson situé dans la zone de récupération de chaleur et délimitant un espace annulaire avec la paroi du corps et un faisceau de tubes disposés dans cet espace annulaire, le fluide purifié étant admis à une extrémité de ces tubes et évacué à une autre extrémité dans la tubulure d'évacuation.

L'invention sera maintenant décrite plus en détail en référence aux figures annexées qui représentent seulement un mode d'exécution donné à titre illustratif et non limitatif.

- la figure 1 est un schéma de principe de la circulation du liquide à l'intérieur d'un piège froid conforme à l'invention ;
- la figure 2 est une représentation schématique en coupe d'un premier mode de réalisation d'un piège froid conforme à l'invention ;
la figure 3 représente un autre exemple d'un piège froid conforme à l'invention et qui comporte des variantes de réalisation,

- la figure 4 représente un autre exemple de réalisation d'un piège froid conforme à l'invention.

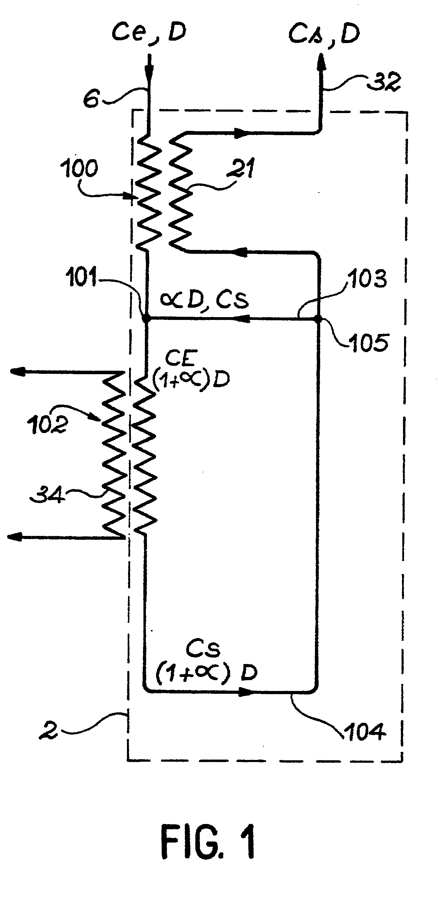

On a représenté sur la figure 1 une vue schématique montrant la circulation d'un métal liquide à l'intérieur d'un piège froid conforme à l'invention.

Le sodium pollué pénètre par la canalisation 6 dans le piège. Sa concentration en impuretés est Ce, et son débit D.

Dans l'échangeur-économiseur 100, ce sodium pollué subit un premier refroidissement au contact du sodium purifié qui circule à contre courant dans la canalisation 21. Au niveau du point 101, auquel aboutit la canalisation 103 par laquelle est recyclée une partie $\alpha.D$ (où $\alpha$ désigne le taux de recyclage) de débit de sodium purifié, le débit augmente et devient $D(1+\alpha)$. En conséquence, la concentration en impuretés baisse et devient CE.

Le sodium pollué ayant été refroidi jusqu'à la température de point froid TpF, la nucléation commence, puis les cristaux se développent. Ils se déposent dans la zone de dépôt 104, de sorte que la concentration en impuretés baisse et devient Cs, le débit restant inchangé.

Au niveau de la dérivation 105, une partie $\alpha.D$ de ce sodium purifié est recyclée dans le sodium pollué, comme on l'a déjà expliqué précédemment.

Au cours de la traversée du refroidissement 102, le fluide pollué est refroidi par un fluide de refroidissement circulant dans la canalisation 34.

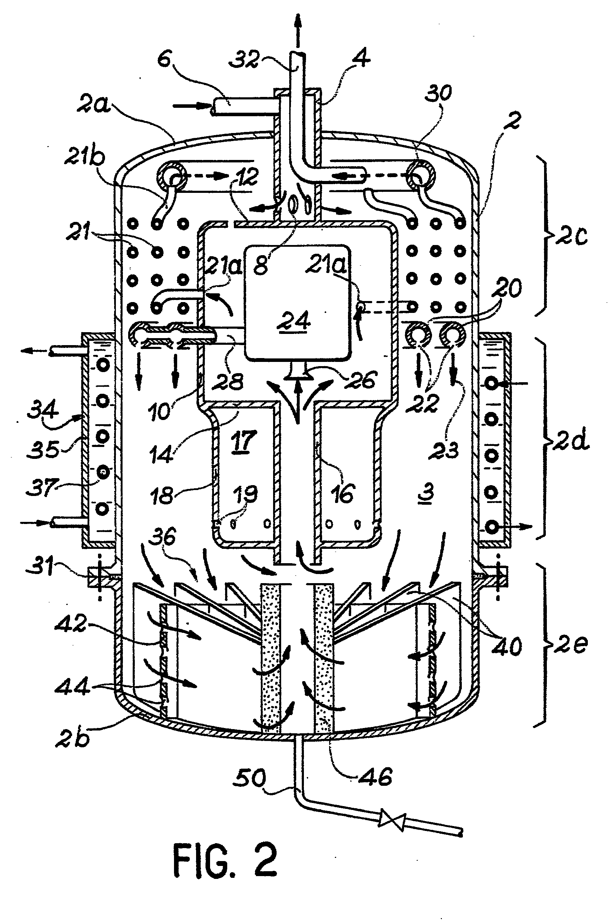

On a représenté sur la figure 2 un premier mode de réalisation d'un piège froid conforme à l'invention. Il comporte un corps 2 constitué d'une partie cylindrique fermée à sa partie supérieure et à sa partie inférieure par des fonds bombés 2a, 2b. Le corps 2 délimite un volume interne 3 à l'intérieur duquel est assurée une circulation du métal liquide à purifier. Ce métal est par exemple du sodium primaire ou secondaire provenant d'un circuit primaire ou secondaire d'un réacteur nucléaire à neutrons rapides. A la partie supérieure du corps 2, on trouve une tubulure d'admission 4, pour le métal pollué et une canalisation d'amenée 6 raccordée à la tubulure 4. A la partie inférieure de la tubulure d'admission 4, on a prévu une pluralité de trous de passage 8 répartis selon une circonférence. Un caisson cylindrique 10, fermé à sa partie supérieure par un fond plat 12, et à sa partie inférieure par un fond plat et circulaire 14 est fixé à l'extrémité inférieure de la tubulure d'admission 4. Au centre du fond 14 est raccordée une cheminée d'admission verticale 16. Cette cheminée est doublée par une virole externe 18 qui permet de délimiter un passage annulaire avec la paroi cylindrique du corps 2, afin de régulariser l'écoulement du métal liquide. La virole 18 et la cheminée 16 délimitent un espace 17 contenant du sodium stagnant qui communique avec le volume 3 par des trous 19 percés dans la virole. Autour du caisson 10, on trouve deux distributeurs concentriques 20 constitués chacun par un tore de diamètre relativement important percé de trous répartis 22 dirigés vers la partie basse du corps 2. Dans le volume interne délimité par le caisson 10, on trouve une pompe, électromagnétique par exemple, représentée schématiquement en 24. La pompe comporte une tubulure d'admission 26 et une ou plusieurs canalisations de refoulement 28 raccordées au volume interne des distributeurs 20.

Autour du caisson 10, et au-dessus des distributeurs 20, on trouve un faisceau de tubes hélicoïdaux 21. Chaque tube comporte une première extrémité 21a qui débouche dans le volume interne délimité par le caisson 10 et une seconde extrémité 21b qui débouche dans un collecteur 30 de forme torique disposé concentriquement à l'axe longitudinal du corps 2. Une canalisation 32 d'évacuation du métal liquide hors du corps 2 est raccordée au collecteur 30.

Le faisceau de tubes 21, constitue un échangeur de chaleur, appelé échangeur-économiseur. Le fluide pollué et chaud, qui circule à l'extérieur des tubes est refroidi par le fluide purifié qui circule à l'intérieur de ces tubes. La température du fluide pollué à la partie basse de la zone d'échange 2c est ainsi abaissée. De cette manière, la quantité de chaleur qu'il sera encore nécessaire d'en extraire pour amener sa température en dessous de la température de saturation est diminuée.

Dans la zone médiane du corps 2d, on trouve des moyens de refroidissement destinés à évacuer une partie de la chaleur du métal liquide situé dans cette zone. Dans l'exemple de réalisation représenté, ces moyens de refroidissement 34 comprennent une jaquette 35 contenant un milieu bon conducteur de la chaleur (par exemple du NaK) et une canalisation 37 enroulée en hélice autour du corps 2 et parcourue par un fluide de refroidissement.

A la partie inférieure 2e du corps 2, on trouve une zone de décantation et de filtration. De préférence une structure alvéolaire 36 repose sur le fond du corps. Cette structure est constituée par une pluralité de cloisons verticales 40 disposées radialement et par une ou plusieurs cloisons circulaires 42 percées de trous de passage 44 pour le métal liquide. Cette structure est de préférence démontable afin de permettre le changement de l'élément de garnissage ou élément filtrant 46, qui se trouve au centre de ladite structure, et qui est destiné à retenir les cristaux contenus dans le métal liquide. L'élément 46 est constitué par un cylindre à parois relativement épaisses disposé coaxialement à l'axe longitudinal du corps 2. Il est constitué de toute matière convenable, et en particulier de laine d'acier inoxydable. La zone de décantation 2e est isotherme, étant donné qu'il n'y a pas, dans cette zone, d'échange de chaleur avec un fluide extérieur, ni avec une autre veine fluide circulant dans le corps.

Afin de pouvoir extraire et nettoyer la structure alvéolaire et l'élément de filtrage 46, on a prévu une bride 31, grâce à laquelle on peut accéder à l'intérieur du corps 2, après avoir vidangé le piège froid par une canalisation 50 spécialement prévue à cet effet.

Dans ce mode de réalisation, on a laissé un petit espace libre entre l'extrémité inférieure de la cheminée 16, et le bord supérieur de l'élément 46 afin de permettre le passage du sodium en cas d'obstruction de l'élément 46.

Le fonctionnement du piège froid est le suivant.

Le sodium pollué contenant les impuretés à éliminer telles que des oxydes, des hydrures, des hydroxydes et des particules métalliques est amené par la canalisation 6 à la tubulure d'admission 4. Il parcourt cette tubulure de haut en bas jusqu'aux orifices de passage 8. Après avoir traversé ces ouvertures, le sodium est admis dans le volume 3 délimité par le corps 2. Il contourne le caisson 10 et circule de haut en bas dans l'espace annulaire compris entre le caisson et la paroi interne de la partie cylindrique du corps 2 en relation d'échange de chaleur avec le sodium relativement plus froid qui circule à contre-courant dans les tubes 21 du faisceau hélicoïdal. En d'autres termes, le fluide pollué est refroidi, tandis que le fluide purifié est réchauffé. Au niveau des distributeurs 20, une partie $\alpha.D$ du débit de sodium froid purifié (dont la valeur peut être ajustée en réglant le régime de la pompe 24) est recyclée et répartie à l'entrée de la zone 2d de refroidissement. Des jets 23 de sodium froid, issus des distributeurs 20, se forment à chaque orifice 22. Le sodium froid de ces jets de masse volumique plus élevée que le sodium chaud, s'écoule vers la partie basse de la zone de refroidissement. Les jets 23 constituent ainsi un refroidisseur tubulaire sans parois et génèrent des gradients thermiques très élevés au niveau de la limite entre le sodium chaud et le sodium froid. Ces gradients thermiques favorisent la nucléation des cristaux d'hydrure de sodium et s'accompagnent d'une sursaturation du sodium très élevée.

En outre, pendant son passage dans la zone de refroidissement 2d, le sodium pollué est refroidi de manière externe par les moyens 34 qui évacuent hors du piège une partie de la chaleur du sodium.

Ainsi, le sodium est refroidi à la fois par la fraction du débit de sodium recyclée et par le refroidisseur externe.

Les nucléis susceptibles d'être formés dans le courant de sodium sont entraînés vers la partie basse 2e du piège froid qui constitue une zone de décantation où les cristaux retenus peuvent grossir par la diffusion provenant de la sursaturation locale à proximité immédiate des surfaces cristallines offertes à la croissance.

En d'autres termes, la sursaturation locale permet la formation des premiers cristaux. Une fois la réaction de cristallisation initiée, elle se propage car la présence de ces premiers cristaux facilite la formation de nouveaux cristaux, ce qui a pour effet d'activer la cristallisation.

L'essentiel du dépôt des impuretés se produit ainsi dans la structure alvéolaire 42, 44, sans boucher l'élément de garnissage 46.

La puissance de refroidissement étant notablement accrue, l'écart entre la température du sodium à la sortie de l'échangeur économiseur et la température du point froid est plus elevé que dans un piège froid classique. Ceci permet, lors d'une campagne de purification, de réduire le nombre de changements de consigne pour la température de point froid, en assurant ainsi une conduite du piège froid beaucoup plus souple.

Le sodium traverse la structure alvéolaire en circulant à travers les trous de passage 44, puis l'élément 46. Le sodium est ensuite aspiré dans la cheminée 16 et pénètre dans le caisson 10. Une fraction du débit est aspirée par la pompe électromagnétique 24 et refoulée dans les distributeurs 20. La fraction restante du sodium purifié est admise dans les tubes du faisceau hélicoïdal qu'elle traverse en se réchauffant avant de parvenir dans le collecteur 30 et d'être évacuée hors du piège par la canalisation d'évacuation 32.

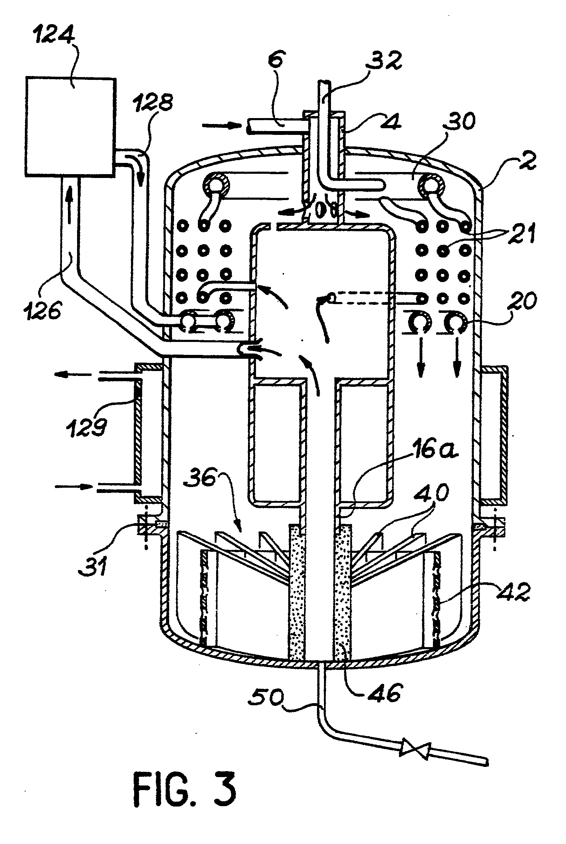

On a représenté sur la figure 3 un autre exemple d'un piège froid, conforme à l'invention, qui comporte diverses variantes de réalisation.

Tout d'abord, la pompe 124 qui permet de recycler une partie du sodium purifié est située à l'extérieur de l'enveloppe 2. En conséquence, on a prévu une canalisation 126 qui raccorde le volume intérieur au caisson 10 à la pompe 124 et une canalisation de refoulement 128 qui amène le sodium jusqu'aux distributeurs 20.

Dans cet exemple de réalisation, les moyens de refroidissement extérieurs, qui permettent d'évacuer une partie de la chaleur du sodium à purifier dans la zone de refroidissement 2d (voir figure 2) sont constitués par une chemise annulaire, qui entoure le corps 2 et qui est parcourue par un courant d'air frais de refroidissement.

En outre, on remarque que la cheminée 16 comporte un prolongement 16a qui s'étend jusqu'au contact avec l'élément 46 de manière à ne laisser aucun espace libre pour une circulation en court-circuit du sodium de la zone de refroidissement vers la cheminée. En conséquence, le sodium est contraint de traverser l'élément 46.

Ce prolongement 16a peut comporter, éventuellement, un dispositif de passage du sodium s'ouvrant automatiquement au-delà d'un seuil de perte de charge lié au colmatage de l'élément 46.

Il va de soi que chacune des variantes de réalisation décrites en référence à la figure 3 pourrait être utilisée dans le mode de réalisation de la figure 2 et inversement. Ainsi, on pourrait par exemple réaliser un piège froid conforme à la figure 2 mais comportant une pompe disposée à l'extérieur de l'enveloppe 2, ses autres caractéristiques restant inchangées.

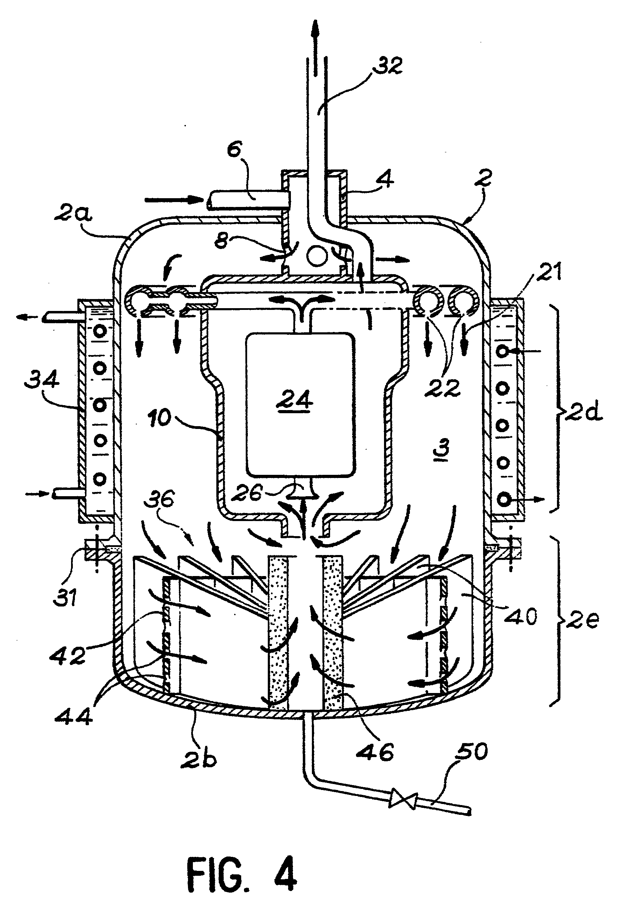

On a représenté sur la figure 4 une deuxième variante de réalisation d'un piège froid conforme à l'invention. On remarque que son encombrement, particulièrement sa hauteur est diminué par rapport au mode de réalisation des figures 2 et 3. En effet, la cheminée d'admission est très courte, et la virole externe 18 (voir figure 2), a été supprimée, de telle sorte que la pompe 24 peut être placée plus bas, c'est-à-dire au niveau de l'échangeur-économiseur. En outre le distributeur 30 a été placé au niveau de la partie supérieure du caisson 10.

Comme on l'a expliqué dans ce qui précède, la principale caractéristique d'un piège froid conforme à l'invention réside dans le fait qu'une partie du débit de sodium purifié est recyclée dans le courant de sodium pollué. Cette caractéristique a pour effet de générer du sodium sursaturé dans le piège froid. Ceci peut être mis en évidence par l'exemple suivant.

On réalise le mélange de deux débits égaux de sodium saturé présentant des températures différentes, par exemple un premier débit à une température de 300°C et un deuxième débit ayant une température de 200°C. On obtiendra un courant de sodium à une température de 250°C.

On obtient la concentration résultante suivante :
[CE = 1/2 C*(300°C) + 1/2.C*(200°C)] .

Dans cette formule C*(300°C) et C*(200°C) représentent les concentrations à l'équilibre à 300°C et 200°C respectivement, pour une impureté donnée. Plus précisément, pour l'oxyde de sodium, la concentration sera $CE_0$ avec :
$CE_0 = 1/2(96.38 + 12,08) = 54,23 \ \mu g.gNa^{-1}$.

Or une telle concentration de 54,23 $\mu g.Na^{-1}$ correspond, sur la courbe de solubilité de l'oxyde de sodium, à une température de 268,2°C, c'est-à-dire une température supérieure à 250°C.

De même, pour l'hydrure de sodium :
$CE_H = 1/2(4,6 + 1,19) = 8,38 \mu g.gNa^{-1}$, ce qui correspond à une température de saturation de 272,1°C.

La température du courant résultant est de 250°C, alors que les températures de saturation vis-à-vis de l'oxyde de sodium et de l'hydrure de sodium sont respectivement de 268,2°C et 272,1°C. On constate que ces températures de saturation sont supérieures à la température du mélange à savoir 250°C. On génère ainsi des sursaturations par les écarts de température de 18,2°C (pour l'oxyde) et 22,1°C (pour l'hydrure).

Ces sursaturations importantes sont engendrées par simple mélange des deux courants de sodium sans évacuation de chaleur, c'est-à-dire sans apport de frigories provenant de l'extérieur.

Grâce à cet effet de sursaturation par mélange la durée d'une campagne de purification au moyen d'un piège froid conforme à l'invention est réduite de l'ordre de 30 à 50% par rapport à un piège froid de type antérieur connu.

La prise en compte de la consommation de frigories du piège froid et de la réduction de la durée de la campagne de purification, conduit à des valeurs optimales du taux de recyclage α, comprises entre 1 et 2.

**Revendications**

1. Piège froid pour éliminer des impuretés présentes dans un métal liquide pollué, comprenant un corps (2) muni d'une tubulure d'admission (6) pour le métal liquide pollué et une structure interne délimitant un parcours pour le métal, cette structure comportant successivement des moyens de refroidissement (34) du métal liquide pour le refroidir jusqu'à une température de point froid inférieure à la température de saturation en impuretés et provoquer une cristallisation des impuretés, des moyens de rétention (36) des impuretés et une tubulure d'évacuation (32) pour évacuer, hors du corps, le métal débarrassé des impuretés, caractérisé en ce qu'il comporte des moyens (20, 22) pour recycler en amont des moyens de refroidissement (34, 129) une partie du fluide ayant traversé les moyens (36) de rétention des impuretés, des moyens d'alimentation (24, 124) pour assurer la circulation du métal liquide purifié vers les moyens de recyclage, le rapport du débit recyclé au débit d'entrée étant appelé taux de recyclage α.

2. Piège froid selon la revendication 1, caractérisé en ce que le corps comprend trois zones, à savoir une zone de récupération de chaleur (2c) dans laquelle le métal pollué entrant dans le corps (2) et le fluide purifié relativement plus froid circulent en relation d'échange de chaleur, une zone de refroidissement (2d) du liquide, dans laquelle le métal liquide est refroidi jusqu'à une température de point froid inférieure à sa température de saturation, une zone (2e) de dépôt des impuretés située à la partie inférieure du corps (2).

3. Piège froid selon l'une quelconque des revendications 1 et 2, caractérisé en ce qu'il comporte un caisson (10) situé dans la zone (2c) de récupération de chaleur et délimitant un espace annulaire avec la paroi du corps et un faisceau de tubes (21) disposés dans cet espace annulaire, le fluide purifié étant admis dans chacun de ces tubes à une première extrémité (21a) et évacué à une deuxième extrémité (21b) reliée à la tubulure d'évacuation (32).

4. Piège froid selon l'une quelconque des revendications 1 à 3, caractérisé en ce que les moyens pour réinjecter une partie du métal liquide purifié sont constitués par au moins un distributeur annulaire (20) entourant le caisson (10), relié à l'intérieur de ce caisson et percé d'orifices (22) débouchant vers la zone de refroidissement (2d).

5. Piège froid selon l'une quelconque des revendications 1 à 4, caractérisé en ce que les dits moyens d'alimentation sont constitués par une pompe interne (24) pour alimenter le distributeur en métal liquide purifié.

6. Piège froid selon l'une quelconque des revendications 1 à 4, caractérisé en ce que les dits moyens d'alimentation sont constitués par une pompe externe (124) et un circuit externe (126, 128) pour la réinjection du fluide purifié dans la zone de refroidissement (2d).

7. Piège froid selon l'une quelconque des revendications 1 à 6, caractérisé en ce qu'il comporte une structure alvéolaire (36) située dans la zone de décantation ou zone de dépôt (2e) des impuretés et un élément de garnissage (46) disposé au centre de la structure alvéolaire (36).

8. Piège froid selon la revendication 7, caractérisé en ce que la structure alvéolaire (36) est constituée de plaques verticales (40) disposées radialement, et d'au moins une cloison circulaire (42) percée d'orifices de passage (44).

9. Piège froid selon l'une quelconque des revendications 1 à 8, caractérisé en ce que le taux du recyclage α est compris entre 1 et 2.

## Claims

1. Cold trap for eliminating the impurities present in a polluted liquid metal, comprising a body (2) equipped with an admission pipe (6) for the polluted liquid metal and an internal structure defining a path for the metal, said structure being successively provided with means (34) for cooling the liquid metal so that it can be cooled to a cold point temperature below the impurity saturation temperature and can bring about a crystallization of the impurities, means (36) for retaining impurities and a discharge pipe (32) for discharging the impurity-free metal from the body, characterized in that it comprises means (20, 22) for recycling upstream of the cooling means (34, 129) part of the fluid which has passed through the impurity retention means (36) and supply means (24, 124) for ensuring the flow of purified liquid metal to the recycling means, the ratio of the recycled flow to the intake flow being called the recycling rate α.

2. Cold trap according to claim 1, characterized in that the body comprises three zones, namely a heat recuperation zone (2c) in which the polluted metal entering the body (2) and the relatively colder purified fluid circulate in heat exchange relationship, a cooling zone (2d) for the liquid, in which the liquid metal is cooled to a cold point temperature below its saturation temperature and an impurity deposition zone (2e) located in the lower part of the body (2).

3. Cold trap according to either of the claims 1 and 2, characterized in that it comprises a box (10) located in the heat recuperation zone (2c) and which defines an annular space with the wall of the body and a bundle of tubes (21) disposed in said annular space, the purified fluid entering each of the tubes at a first end (21a) and is discharged at a second end (21b) connected to the discharge pipe (32).

4. Cold trap according to any one of the claims 1 to 3, characterized in that the means for reinjecting part of the purified liquid metal are constituted by at least one annular distributor (20) surrounding the box (10), connected to the interior of said box and having orifices (22) issuing into the cooling zone (2d).

5. Cold trap according to any one of the claims 1 to 4, characterized in that it comprises an internal pump (24) for supplying purified liquid metal to the distributor.

6. Cold trap according to any one of the claims 1 to 4, characterized in that it comprises an external pump (124) and an external circuit (126, 128) of reinjecting purified fluid into the cooling zone (2d).

7. Cold trap according to any one of the claims 1 to 6, characterized in that it comprises a cellular structure (36) located in the settling or deposition zone (2e) for the impurities and a lining element (46) located in the centre of the cellular structure (36).

8. Cold trap according to claim 7, characterized in that the cellular structure (36) is constituted by radially positioned plates (40) and at least one circular partition (42) having passage orifices (44).

9. Cold trap according to any one of the claims 1 to 8, characterized in that the recycling rate α is between 1 and 2.

## Patentansprüche

1. Kältefalle zum Eliminieren von in einem verunreinigten, flüssigen Metall vorhandenen Verunreinigungen, mit einem Hauptteil (2), der mit einem Zufuhrstutzen (6) für das verunreinigte, flüssige Metall und einer den Durchfluß des Metalls abgrenzenden, inneren Struktur versehen ist, wobei diese Struktur der Reihe nach aufweist: eine Kühlvorrichtung (34) für das flüssige Metall, um es bis auf eine Temperatur eines Kältepunktes unterhalb der Sättigungstemperatur der Verunreinigungen abzukühlen und eine Kristallisation der Verunreinigungen zu verursachen; eine Vorrichtung (36) zum Zurückhalten der Verunreinigungen und einen Ablaufstutzen (32), um das von den Verunreinigungen befreite Metall aus dem Hauptteil zu befördern, dadurch gekennzeichnet, daß sie eine Vorrichtung (20, 22) zum Zurückführen in Aufwärtsrichtung der Kühlvorrichtung (34, 129), wobei ein Teil der Flüssigkeit die Vorrichtung (36) zum Zurückhalten der Verunreinigungen durchquert, und eine Versorgungsvorrichtung (24, 124) aufweist, um die Zirkulation des gereinigten, flüssigen Metalls zur Kühlvorrichtung sicherzustellen, wobei das Verhältnis zwischen dem rückgeführten Durchsatz und dem zugeführten Durchsatz Rückführverhältnis α genannt wird.

2. Kältefalle nach Anspruch 1, dadurch gekennzeichnet, daß der Hauptteil drei Zonen aufweist, nämlich eine Wärmerückgewinnungszone (2c), in welcher das in den Hauptteil (2) kommende, verunreinigte Metall und die vergleichsweise kältere, gereinigte Flüssigkeit zirkulieren in einer Wärmeaustauschverbindung, eine Kühlzone (2d) für die Flüssigkeit, in welcher das flüssige Metall bis auf eine Temperatur eines Kältepunktes unterhalb seiner Sättigungstemperatur abgekühlt wird, und eine Ablagerungszone (2e) für die Verunreinigungen, die sich im untern Bereich des Hauptteils befindet.

3. Kältefalle nach einem der Ansprüche 1 und 2, dadurch gekennzeichnet, daß sie ein Gehäuse (10) aufweist, das sich in der Wärmerückgewinnungszone (2c) befindet und einen ringförmigen Raum begrenzt, wobei die Wand des Hauptteils und ein Bündel von Röhren (21) in diesem ringförmigen Raum angeordnet sind, wobei die gereinigte Flüssigkeit in jede dieser Röhren durch eine erste Öffnung (21a) eingelassen und durch eine zweite, mit dem Auslaßstutzen (32) verbundene Öffnung ausgelassen wird.

4. Kältefalle nach einem der Ansprüche 1 bis 3, dadurch gekennzeichnet, daß die Vorrichtung zum Wiedereinführen eines Teils des gereinigten, flüssigen Metalls aus wenigstens einem ringförmigen Verteiler (20) besteht, der das Gehäuse (10) umgibt, mit dem Inneren dieses Gehäuses verbunden ist und von Öffnungen (22) durchbohrt ist, die im Innern der Kühlzone (2d) münden.

5. Kältefalle nach einem der Ansprüche 1 bis 4, dadurch gekennzeichnet, daß die Versorgungsvorrichtung aus einer internen Pumpe (24) besteht, um den Verteiler mit gereinigtem, flüssigen Metall zu versorgen.

6. Kältefalle nach einem der Ansprüche 1 bis 4, dadurch gekennzeichnet, daß die Versorgungsvorrichtung aus einer externen Pumpe (124) und einem externen Kreislauf (126, 128) besteht, um die gereinigte Flüssigkeit wieder in die Kühlzone (2d) einzuführen.

7. Kältefalle nach einem der Ansprüche 1 bis 6, dadurch gekennzeichnet, daß sie eine in der Abscheide- oder Ablagerungszone (2e) für die Verunreinigungen angeordnete Wabenstruktur (36) und ein in der Mitte der Wabenstruktur (36) angeordnetes Aufsteckelement (46) aufweist.

8. Kältefalle nach Anspruch 7, dadurch gekennzeichnet, daß die Wabenstruktur (36) aus radial angeordneten, vertikalen Platten (40) und wenigstens einer von Durchlaßöffnungen (44) durchbohrten, kreisförmigen Trennwand besteht.

9. Kältefalle nach einem der Ansprüche 1 bis 8, dadurch gekennzeichnet, daß das Rückführverhältnis α zwischen 1 und 2 liegt.

FIG. 1

FIG. 2

FIG. 3

EP 0 216 655 B1

FIG. 4